# NEUE EUROPÄISCHE PATENTSCHRIFT

(11) **EP 1 858 348 B2**
(45) Veröffentlichungstag und Bekanntmachung des Hinweises auf die Entscheidung über den Einspruch: **23.01.2019**
(45) Hinweis auf die Patenterteilung: 24.02.2016
(21) Anmeldenummer: 06723152.2
(22) Anmeldetag: 01.03.2006
(51) Int. Cl.: A23L 7/126

(54) **ISOMALTULOSE IN CEREALIEN-PRODUKTEN**
ISOMALTULOSE IN CEREAL PRODUCTS
ISOMALTULOSE DANS LES PRODUITS CEREALIERS

(30) Priorität: 07.03.2005 DE 102005010834
(43) Veröffentlichungstag der Anmeldung: 28.11.2007
(73) Patentinhaber: Südzucker AG Mannheim/Ochsenfurt, 68165 Mannheim (DE)
(72) Erfinder: FRITZSCHING, Bodo, 69502 Hemsbach (DE); KOWALCZYK, Jörg, 67304 Eisenberg/Steinborn (DE)
(74) Vertreter: Schwahn, Hartmut
(86) Internationale Anmeldenummer: PCT/EP2006/001854
(87) Internationale Veröffentlichungsnummer: WO 2006/094685

(56) Entgegenhaltungen:
- EP-A2- 0 586 138
- WO-A-02/21937
- WO-A1-92/21937
- JP-A- H09 107 900
- US-A- 2 196 395
- US-A- 5 292 536
- US-A- 5 298 263
- US-A1- 2004 013 771
- 'ISOMALTULOSE, SECOND OPINION REGARDING CONSUMER SAFETY, IN ACCORDANCE WITH EUROPEAN REGULATION 258/97 CONCERNING NOVEL FOODS AND NOVEL INGREDIENTS' HEALTH COUNCIL OF THE NETHERLANDS Nr. 2004/1, 15 Juni 2004, THE HAGUE, NL,

## Beschreibung

Die vorliegende Erfindung betrifft Cerealien-Produkte in beschichteter und unbeschichteter Form, Verfahren zur Herstellung beschichteter und unbeschichteter Cerealien sowie die Verwendung von Isomaltulose zur Herstellung von Cerealien-Produkten, wobei die Isomaltulose als Bindemittel und/oder als Bestandteil einer Beschichtungslösung oder eines Beschichtungssirups dient.

Cerealien, also Getreideprodukte insbesondere aus Mais, Weizen, Reis, Hafer, Gerste oder Roggen weisen üblicherweise Vitamine, Mineralstoffe sowie Ballaststoffe auf und haben sich als ernährungsphysiologisch wichtige Bestandteile der heutigen Ernährung durchgesetzt. Sie haben in der Regel einen günstigen Einfluss auf den Blutzuckerspiegel und die Cholesterinwerte und tragen damit zu einer Gesunderhaltung des Konsumenten bei.

So sind aus der EP 0 434 025 B1 Cerealien in Form von Crispies bekannt. Crispies sind Extrudate aus einem oder mehreren Mehlsorten oder auch aus gepufften Cerealienkörnern, die unter Zusatz von Zucker und weiteren geschmacksgebenden Komponenten hergestellt sind. Die genannte europäische Patentschrift stellt Rezepturen und Verfahren zur Herstellung von Crispies zur Verfügung, die verbesserte ernährungsphysiologische Eigenschaften aufweisen. Dies wird dadurch erreicht, dass saccharosefreie Crispies bereitgestellt werden, die als Zuckeraustauschstoff Polyole oder Zuckeralkohole wie Sorbit, Mannit, Xylit, Maltit, Lactit oder Isomalt aufweisen.

WO 02/21937 A2 betrifft ein salzhaltiges Snackprodukt, das aus Cerealien und einem Bindemittel besteht. Das Bindemittel kann unter anderem Isomaltulose sein. Der Cerealien-Gehalt dieses Produktes ist unter 50 % des Gesamtgewichtes.

US 5,292,536 betrifft ein Verfahren zur Herstellung eines mit Isomaltulose überzogenen Produktes. Der Gehalt von Isomaltulose beträgt 20 bis 100% und die Beschichtung wird bei einer Temperatur von 15-30°C durchgeführt.

US 2004/0013771 A1 betrifft ein Verfahren zur Herstellung eines Cerealienproduktes mit einem Kern aus Cerealien und einem Binder. Der Binder enthält mindestens 30 Gew.-% Isomaltulose. Die Cerealien werden mit dem Binder bei einer Temperatur von 21 bis 54°C in Verbindung gebracht.

Die US 6,475,540 B1 offenbart Cerealien, in denen die üblicherweise vorhandene Saccharose teilweise oder vollständig ersetzt ist durch Tagatose oder Gemische von Tagatose mit Polyolen wie Sorbit, Maltit, Isomalt, Erythrit, Xylit, Lactit oder hydriertem Maissirup.

Ein Nachteil, der sich bei der Verwendung von Polyolen üblicherweise einstellt, ist deren laxativer Effekt. Darüber hinaus sind viele Polyole wie Sorbit oder Maltit hygroskopisch oder zeichnen sich wie Lactit durch eine deutlich erkennbar reduzierte Süße im Vergleich zu Saccharose aus. Andere Polyole wie Xylit oder Erythrit vermitteln dem Konsumenten einen Kühleffekt, der in Cerealien unerwünscht ist. Darüber hinaus zeigen die Polyole in der Regel keine Maillard-Bräunung, die insbesondere bei Cerealien häufig erwünscht ist. Schließlich zeigt sich, dass die Verwendung von Zuckeraustauschstoffen nach wie vor bei vielen Konsumenten noch nicht akzeptiert ist und diese die in der Regel als "zuckerfrei" beworbenen Produkte nicht in erwünschtem Maße annehmen.

Der vorliegenden Erfindung liegt daher das technische Problem zugrunde, Cerealien-Produkte bereitzustellen, die möglichst frei von Diabetiker-ungeeigneten üblichen Zuckern wie Saccharose oder Glucose sind, gleichzeitig aber die vorgenannten Nachteile, die mit der Verwendung von Zuckeraustauschstoffen einhergehen, nicht aufweisen.

Die vorliegende Erfindung löst das ihr zugrundeliegende Problem durch die Bereitstellung eines Cerealien-Produkts, umfassend a) durch mindestens ein Bindemittel verbundene Cerealien und/oder b) mindestens eine Beschichtung, und zwar als amorphes Glazing oder kristallines Frosting, aufweisende Cerealien, wobei das Cerealien-Produkt 50 bis 95 Gew.-% (bezogen auf Gesamttrockensubstanz des Cerealien-Produktes), Cerealien und 5 bis 50 Gew.-% (bezogen auf Gesamttrockensubstanz des Cerealien-Produktes) Isomaltulose enthält. Die erfindungsgemäßen Cerealien-Produkte können daher eine Isomaltulose-haltige Beschichtung und/oder ein Isomaltulose-haltiges Bindemittel aufweisen.

Die Erfindung sieht daher ein Cerealien-Produkt vor, welches einerseits in wesentlichen Anteilen, das heißt zu 50 bis 95 Gew.-%, vorzugsweise mehr als 50 Gew.-% bis 95 Gew.-%, insbesondere 60 bis 95 Gew.-%, 70 bis 95 Gew.-%, 80 bis 95 Gew.-% oder besonders bevorzugt 90 Gew.-% bis 95 Gew.-% (bezogen auf Gesamttrockensubstanz des Cerealien-Produktes) Cerealien enthält und darüber hinaus in einer Menge von 5 bis 50 Gew.-% (bezogen auf Gesamttrockensubstanzgehalt des Cerealien-Produkts) den Zucker Isomaltulose (6-O-α-D-Glucopyranosyl-fructose oder Palatinose®) aufweist.

In einer besonders bevorzugten Ausführungsform sieht die Erfindung Cerealien-Produkte vor, welche aus einem Cerealienkern, insbesondere einem Kern, umfassend Cerealien und, optional, bevorzugt mindestens ein Bindemittel, und mindestens einer auf dem Kern aufgebrachten Beschichtung aufgebaut sind. In einer besonders bevorzugten Ausführungsform kann dabei vorgesehen sein, dass die Isomaltulose sowohl im Kern als auch in der Beschichtung vorhanden ist. In einer weiteren Ausführungsform kann vorgesehen sein, dass die Isomaltulose allein im Kern und nicht in der Beschichtung vorhanden ist. In einer weiteren bevorzugten Ausführungsform kann vorgesehen sein, dass die Isomaltulose allein in der Beschichtung und nicht im Kern vorhanden ist.

In einer weiteren bevorzugten Ausführungsform ist vorgesehen, dass die Isomaltulose der einzige zugesetzte Zucker im Cerealien-Produkt ist. In einer weiteren bevorzugten Ausführungsform ist vorgesehen, dass die Isomaltulose das einzig zugesetzte körpergebende süßende Agens im Cerealien-Produkt ist. In einer weiteren bevorzugten Ausführungsform ist vorgesehen, dass die Isomaltulose das einzige zugesetzte süßende Agens im Cerealien-Produkt ist. Die Erfindung stellt in besondert bevorzugter Ausführungsform Cerealien-Produkte bereit, die Saccharose-frei oder Glucose-frei oder Fructose-frei oder frei von Gemischen zweier oder aller der genannten drei Zucker, zum Beispiel Invertzucker-frei, ist.

Im Zusammenhang mit der vorliegenden Erfindung werden unter dem Begriff "süßendes Agens" Substanzen verstanden, die Süßkraft aufweisen und zum Beispiel Lebensmitteln oder Getränken zugesetzt werden, um einen Süßegeschmack hervorzurufen. Im Zusammenhang mit der vorliegenden Erfindung werden die "süßenden Agenzien" unterteilt in "Zucker" wie Saccharose, Glucose oder Fructose, die Körper und Süßkraft geben sowie "Süßungsmittel", also Stoffe, die keine Zucker sind aber trotzdem Süßkraft aufweisen, welche wiederum untergliedert werden in "Zuckeraustauschstoffe", also süßende Agenzien, die einen Körper und einen physiologischen Brennwert zusätzlich zu einer Süßkraft aufweisen (körpergebende Süßungsmittel), und "Intensivsüßstoffe", also Stoffe, die in der Regel eine sehr hohe Süßkraft, aber keinen Körper und in der Regel keinen oder nur einen geringfügigen physiologischen Brennwert aufweisen.

In einer besonders bevorzugten Ausführungsform ist daher vorgesehen, dass die Isomaltulose das einzig zugegebene süßende Agens in dem Cerealien-Produkt ist, dass heißt abgesehen von Isomaltulose keine Zucker, keine Intensivsüßstoffe und keine Zuckeraustauschstoffe und/oder Zuckeralkohole in das Cerealien-Produkt zugegeben wurden. Es kann aber auch vorgesehen sein, dass die Isomaltulose das einzig und alleinig in das Cerealien-Produkt zugegebene vorkommende körpergebende süßende Agens ist, dass heißt abgesehen von Isomaltulose keine Zucker, keine Zuckeralkohole und keine Zuckeraustauschstoffe zugegeben wurden. In einer weiteren Ausführungsform kann vorgesehen sein, dass die Isomaltulose der einzig in das Cerealien-Produkt zugegebene Zucker ist, dass heißt keine weiteren Zucker zugegeben worden sind.

Im Zusammenhang mit der vorliegenden Erfindung wird also unter dem Begriff der "einzig zugesetzte" Zucker beziehungsweise das "einzig zugesetzte" süßende Agens verstanden, das neben der Isomaltulose bei der Herstellung des Cerealien-Produktes keine weiteren Zucker beziehungsweise süßende Agenzien beziehungsweise körpergebende süße Agenzien hinzugegeben werden. Im Cerealien-Produkt selbst sind allerdings je nach Art und Herkunft der eingesetzten Rohstoffe gegebenenfalls endogene Zucker, unter anderem auch Saccharose oder Glucose, vorhanden. Bei diesen naturgemäß in den Rohstoffen vorhandenen Zuckern handelt es sich jedoch um die Zucker, welche von der Herkunftspflanze der Cerealie selbst photosynthetisch hergestellt wurden. Wenn im Zusammenhang mit der vorliegenden Erfindung also von Saccharose-, Glucose- oder Fructose-freien Cerealien-Produkten oder von "zugesetzten Zuckern" oder "zugesetzten süßen Agenzien" die Rede ist, werden die natürlicherweise durch Photosynthese erzeugten Zucker oder Zuckeralkohole, die endogen in der Cerealie vorhanden sind, dadurch nicht erfasst.

Im Zusammenhang mit der vorliegenden Erfindung werden unter Cerealien (oder Zerealien) Getreideprodukte oder Getreideersatzprodukte, insbesondere Müsli, salzige Snacks, Frühstücksprodukte oder Energieriegel verstanden, welche überwiegend aus Getreidekörnern, Getreideflocken, Getreidegranulaten, Getreideextrudaten, Getreidemehl, Getreidepulver, Getreideagglomeraten oder deren Ersatzprodukten wie Sojazubereitungen, zum Beispiel Sojabohnen, Sojamehl, Sojaagglomerat, Sojagranulat, Sojaextrakten sowie Sojapulver aufgebaut sind und darüber hinaus mindestens ein diese Getreide- und/oder Sojaprodukte zusammenfügendes Bindemittel enthalten. Das eingesetzte Getreide kann Weich- oder Hartweizen, Dinkel, Roggen, Hafer, Mais, Gerste, Reis, Sorghum, Hirse, Triticale, Buchweizen, Amarant, Quinoa oder ähnliches wie Soja sein. In einer bevorzugten Ausführungsform der vorliegenden Erfindung wird als Bindemittel für die Cerealien Isomaltulose eingesetzt.

In einer besonders bevorzugten Ausführungsform weist das Cerealien-Produkt der vorliegenden Erfindung 5 bis 50 Gew.-% (bezogen auf Gesamttrockensubstanz des Cerealien-Produktes), insbesondere 10 bis 35 Gew.-% (bezogen auf Gesamttrockensubstanz des Cerealien-Produktes), vorzugsweise 20 bis 30 Gew.-% (bezogen auf Gesamttrockensubstanz des Cerealien-Produktes) Isomaltulose auf, wobei die Isomaltulose in einer ersten bevorzugten Ausführungsform allein im Kern, in einer zweiten bevorzugten Ausführungsform allein in der Beschichtung und in einer dritten bevorzugten Ausführungsform im Kern und in der Beschichtung vorhanden ist.

In einer besonders bevorzugten Ausführungsform weist daher das Cerealien-Produkt der vorliegenden Erfindung die Isomaltulose entweder allein in der Beschichtung oder in der Beschichtung und im Kern auf.

Im Kern fungiert die Isomaltulose als Bindemittel und als körpergebendes süßendes Agens, in der Beschichtung als Beschichtungsmittel und als körpergebendes süßendes Agens.

In einer weiteren bevorzugten Ausführungsform ist vorgesehen, dass die Beschichtung des Cerealien-Produktes aus Isomaltulose besteht, im wesentlichen besteht oder in wesentlichen Anteilen enthält. Es kann dabei erfindungsgemäß in besonders bevorzugter Ausführungsform vorgesehen sein, dass die Beschichtung des Cerealien-Produktes 10 bis 100 Gew.-%, vorzugsweise 20 bis 90 Gew.-%, vorzugsweise 30 bis 80 Gew.-% Isomaltulose (jeweils bezogen auf die Gesamttrockensubstanz der Beschichtung) aufweist. In einer Ausführungsform der vorliegenden Erfindung können mehrere oder viele Schichten vorgesehen sein, wobei diese hinsichtlich ihrer Zusammensetzung oder Art der Aufbringung gleich sein oder voneinander abweichen können. Der Trockensubstanzanteil der Beschichtung am Gesamt-Cerealien-Produkt kann in bevorzugter Ausführungsform 0 bis 50 Gew.-%, vorzugsweise 2 bis 40 Gew.-%, vorzugsweise 5 bis 30 Gew.-%, insbesondere 10 bis 25 Gew.-%, jeweils bezogen auf das Trockengewicht des Cerealien-Produkts betragen.

In einer besonders bevorzugten Ausführungsform ist vorgesehen, dass die erfindungsgemäßen Cerealien-Produkte im Kern oder/und in der Beschichtung mindestens einen Zusatzstoff enthalten.

Im Zusammenhang mit der vorliegenden Erfindung werden unter Zusatzstoffen solche Stoffe verstanden, die dem erfindungsgemäßen Cerealien-Produkt zusätzlich zu Isomaltulose und den Cerealien hinzugegeben werden können. Demgemäß sind die Zusatzstoffe optional einzusetzende Stoffe und die Erfindung erfasst sowohl erfindungsgemäße Cerealien-Produkte, die diese Stoffe oder eine Auswahl davon aufweisen ebenso wie Cerealien-Produkte, die keine oder nicht alle der genannten Zusatzstoffe aufweisen. Die Verwendung der Zusatzstoffe kann je nach Anwendungsgebiet und Anforderungsprofil der Märkte und der Konsumenten individuell zusammengestellt werden.

Im Zusammenhang mit der vorliegenden Erfindung wird unter einem Zusatzstoff zum Beispiel ein Präbiotikum, welches in vorteilhafter Weise die ernährungsphysiologischen Eigenschaften des Cerealien-Produkts positiv beeinflusst, ein Intensivsüßstoff, ein Zucker oder ein Zuckeraustauschstoff, welche die Süßkraft des Cerealien-Produkts beeinflussen, eine fetthaltige Komponente oder ein Molkerei- oder Milcherzeugnis, welche insbesondere die Art und den Geschmack des erzielten Produktes beeinflussen, oder ein Ergänzungsstoff verstanden.

Unter einem Ergänzungsstoff werden solche Stoffe verstanden, die insbesondere das Aussehen, den Geschmack, die Organoleptik, den Nährwert, ernährungsphysiologische Eigenschaften, die Verarbeitbarkeit, Lagerfähigkeit oder Gebrauchsfertigkeit des Cerealien-Produkts betreffen.

In einer weiteren bevorzugten Ausführungsform ist also vorgesehen, dass der mindestens eine Zusatzstoff als Präbiotikum, vorzugsweise Inulin, Oligofructose, resistente Stärke, ß-Glucane oder Galactooligosaccharid ausgeführt ist.

Im Zusammenhang mit der vorliegenden Erfindung wird unter einem Präbiotikum ein Zusatzstoff verstanden, der selektiv das Wachstum und/oder die Aktivität spezifischer Bakterien im menschlichen oder tierischen Verdauungstrakt, insbesondere Bifidobakterien und/oder Lactobacillen so stimuliert, dass gesundheitsfördernde Effekte zu erwarten sind oder auftreten.

Im Zusammenhang mit der vorliegenden Erfindung wird unter einem "Probiotikum" eine lebende mikrobielle Zusatzkomponente verstanden, die durch Stabilisierung oder Verbesserung der mikrobiellen Zusammensetzung im Verdauungstrakt des menschlichen oder tierischen Konsumenten dessen Gesundheit fördert. Derartige probiotische Mikroorganismen, die zum Beispiel in Lebensmitteln eingesetzt werden können, sind zum Beispiel: Bifidobacterium wie Stämme *B*. *adolescentis, B. animalis, B. bifidum, B. longum, B. thermophilum; Enterococccus; Lactobacillus* wie die Stämme *Lb. acidophilus, Lb. brevis, Lb, casei, Lb. cellobiosus, Lb. crispatus, Lb. delbrueckii subsp. Bulgaricus, Lb. fermentum, Lb. GG, Lb. johnsonii, Lb. lactis, Lb. plantarum, Lb. reuteri, Lb. rhamnosus, Lb. salivarius; Bacillus cereus toyoi; Bacillus cereus; Leuconostoc; Pediococcus acidilactici; Propionibacterium; Streptococcus* wie die Stämme *S*. *cremoris, S. infantarius, S. intermedius, S. lactis, S. salivarius subsp. thermophilus* (vergleiche Fuller, J. Appl. Bacteriol. (1989)). Bevorzugte Probiotika sind Bakterien der Gattungen *Lactobacillus* und *Bifidobacterium.*

Im Zusammenhang mit der vorliegenden Erfindung wird unter "Synbiotikum" ein Gemisch aus mindestens einem Präbiotikum und mindestens einem Probiotikum verstanden, das durch Verbesserung der Überlebensrate und Erhöhung der Anzahl gesundheitsfördernder lebender mikrobieller Organismen im Gastrointestinal-Trakt die Gesundheit des menschlichen oder tierischen Konsumenten fördert, insbesondere durch selektive Stimulierung des Wachstums und/oder der Stoffwechsel-Aktivität der mikrobiellen Organismen.

In einer weiteren bevorzugten Ausführungsform ist vorgesehen, dass der mindestens eine Zusatzstoff als Probiotikum, vorzugsweise Bifidobakterien oder Lactobakterien ausgeführt ist. Derartige probiotische Bakterienkulturen können bevorzugt als Trockenkulturen oder Dauerkulturen ausgeführt sein. In einer weiteren bevorzugten Ausführungsform ist vorgesehen, Synbiotika, das heißt Mischungen von Probiotika und Präbiotika, einzusetzen.

Die Erfindung sieht auch vor, dass der mindestens eine Zusatzstoff als fetthaltige Komponente, zum Beispiel Kakaomasse, gehärtetes oder ungehärtetes Pflanzenfett oder ähnliches, zum Beispiel auch Fettersatzstoff, ausgeführt ist.

Die Erfindung sieht in einer weiteren bevorzugten Ausführungsform vor, dass der mindestens eine Zusatzstoff als Molkerei- oder Milcherzeugnis, insbesondere lactosefreies Milcherzeugnis, zum Beispiel Magermilchpulver, Vollmilchpulver, lactosefreies Mager- oder Vollmilchpulver, Molkenextrakt, Molkenerzeugnis ausgeführt ist. In dieser Ausführungsform, also einem Cerealien-Produkt enthaltend Isomaltulose, ein Milcherzeugnis und eine Kakaokomponente, ist bevorzugt vorgesehen, das Milcherzeugnis in einer Menge von 2 bis 40 Gew.-%, bevorzugt 5 bis 20 Gew.% (bezogen auf das Gesamtgewicht des Cerealien-Produkts) einzusetzen. Insbesondere in dieser letztgenannten Ausführungsform ist bevorzugt vorgesehen, die Isomaltulose in einer Menge von 20 bis 50 Gew.-% (bezogen auf das Gesamtgewicht des Cerealien-Produkts) einzusetzen.

In einer weiteren Ausführungsform ist vorgesehen, dass der mindestens eine Zusatzstoff ein Zucker, zum Beispiel Saccharose, Glucose, Fructose, Maltose, Lactose, Reisstärke, Maisstärke, Kartoffelstärke, oder eine Mischung zweier oder mehrerer davon ist.

Die Erfindung betrifft in einer Ausführungsform auch erfindungsgemäße Cerealien-Produkte, die neben ihrem Gehalt an mindestens 5 Gew.-% Isomaltulose Süßungsmittel enthalten, zum Beispiel Zuckeraustauschstoffe oder Intensivsüßstoffe.

In einer Ausführungsform der Erfindung ist vorgesehen, dass der Zuckeraustauschstoff insbesondere ein Zuckeralkohol ist und insbesondere ausgewählt ist aus der Gruppe bestehend aus Isomalt, 1,1-GPM (1-O-α-D-Glucopyranosyl-D-mannit), 1,6-GPS (6-O-α-D-Glucopyranosyl-D-sorbit), 1,1-GPS (1-O-α-D-Glucopyranosyl-D-sorbit), Maltodextrine, Lactit, Maltit, Erythrit, Xylit, Mannit, Sorbit, Maltitsirup, hydrierte und nichthydrierte Stärkehydrolysate und einer Mischung zweier oder mehrerer davon.

In einer weiteren bevorzugten Ausführungsform ist daher vorgesehen, dass die Beschichtung des Cerealien-Produktes neben Isomaltulose also ein oder mehrere Polyole aufweist, zum Beispiel Sorbit, Maltit, Erythrit, Xylit, Lactit, Mannit oder Isomalt oder ein Gemisch davon.

In einer weiteren bevorzugten Ausführungsform kann daher vorgesehen sein, dass, sofern die Isomaltulose im Kern als Bindemittel enthalten ist, diese dort gegebenenfalls zusammen mit einem oder mehreren Polyolen eingesetzt wird, zum Beispiel Sorbit, Maltit, Mannit, Isomalt, Erythrit, Xylit oder Lactit oder ein Gemisch davon.

In einer weiteren bevorzugten Ausführungsform ist vorgesehen, dass der Intensivsüßstoff ausgewählt ist aus der Gruppe bestehend aus Sucralose, Natriumcyclamat, Acesulfam K, Neohesperidin-Dihydrochalkon, Glycyrrhizin, Steveosid, Monellin, Thaumatin, Aspartam, Dulcin, Saccharin, Naringin-Dihydrochalkon, Neotame und einer Mischung zweier oder mehrerer davon.

Die Erfindung sieht in einer besonders bevorzugten Ausführungsform vor, dass der mindestens eine Zusatzstoff als Ergänzungsstoff ausgeführt ist und aus der Gruppe bestehend aus Aromastoffen, wie Vanillin, Farbstoffen, Geschmacksstoffen, Mineralstoffen wie Natrium oder Calzium, insbesondere Salzen wie Natriumchlorid, Vitaminen, Folsäure, Emulgatoren, Lecithin, Ballaststoffen, L-Carnitin, Omega-3-Fettsäuren, Triglyzerin mittlerer Kettenlängen, Phythoöstrogene und Ascorbinsäuresalze oder Kombinationen davon ausgewählt ist.

Erfindungsgemäß ist ebenfalls vorgesehen, dass das Cerealien-Produkt darüber hinaus natürliche und/oder synthetische Farbstoffe enthalten kann. Bei den natürlichen Farbstoffen kann es sich beispielsweise um Farbstoffe pflanzlicher Herkunft, wie Carotinoide, Flavonoide und Anthocyane, Farbstoffe tierischer Herkunft wie Cochenille, anorganische Pigmente wie Titandioxid, EisenoxidPigmente und Eisenhydroxid-Pigmente handeln. Als natürliche Farbstoffe können ebenfalls sekundär gebildete Farbstoffe wie die Produkte der enzymatischen Bräunung, beispielsweise Polyphenole und Produkte der nicht-enzymatischen Bräunung wie Melanoidine eingesetzt werden. Erfindungsgemäß ist ferner vorgesehen, dass als natürliche Farbstoffe Erhitzungsprodukte, zum Beispiel Karamelle und Zuckercouleur eingesetzt werden können. Für die erfindungsgemäßen Cerealien-Produkte können darüber hinaus synthetische Farbstoffe wie Azo-, Triphenylmethan-, Indigoid-, Xanthen- und Chinolin-Verbindungen eingesetzt werden.

Erfindungsgemäß können die erfindungsgemäßen Cerealien-Produkte zusätzlich mit natürlichen oder synthetischen Vitaminen ausgewählt aus der Gruppe bestehend aus Vitamin A, Vitamin B₁, Vitamin B₂, Vitamin B₃, Vitamin B₅, Vitamin B₆, Vitamin B₁₂, Vitamin B-Komplex, Vitamin C, Vitamin D, Vitamin E, Vitamin F und Vitamin K angereichert sein. Die erfindungsgemäßen Cerealien-Produkte können darüber hinaus zusätzliche Mineralstoffe und Spurenelemente enthalten.

Die Cerealienprodukte weisen bevorzugt also mindestens einen Zusatzstoff auf, der ausgewählt ist aus der Gruppe bestehend aus Süßungsmitteln, Reisstärke, Kartoffelstärke, Maisstärke, resistente Stärke, ß-Glucan, Intensivsüßstoffen, Aromastoffen, Gewürzen, Molkereiprodukten, Präbiotika, Synbiotika, Probiotika, kakaohaltige Produkte, Schokolade, Fetten, Ergänzungsstoffen, Emulgatoren, Genusssäuren, löslichen und unlöslichen Ballaststoffen wie Inulin und Oligofructose, Konsistenzgebern, Vitamine, L-Carnitin, Omega-3-Fettsäuren; Mineralstoffe, Bindemitteln, Farbstoffen und Konservierungsstoffen.

Die Erfindung sieht in einer besonders bevorzugten Ausführungsform vor, dass das erfindungsgemäße Cerealien-Produkt der vorliegenden Erfindung nicht nur einen, sondern mehrere Zusatzstoffe, zum Beispiel zwei, drei, vier, fünf, sechs oder mehr Zusatzstoffe aufweisen kann.

In einer besonders bevorzugten Ausführungsform der vorliegenden Erfindung liegen die Cerealien in unbehandelter, extrudierter, gekochter oder gepuffter Form vor.

Die erfindungsgemäßen Cerealien-Produkte können Müsliriegel, salzige Snacks, Energieriegel und Frühstücksprodukt, insbesondere Cluster, Müsli, Cornflakes (geröstete Maisflocken), Puffmais, Puffreis, Ringe (Loops), Flocken, Kugeln, Kissen oder Knusperflocken (Crispies) sein.

reis, Ringe (Loops), Flocken, Kugeln, Kissen oder Knusperflocken (Crispies) sein.

In einer weiteren Ausführungsform der vorliegenden Erfindung betrifft diese ein Verfahren zur Herstellung eines agglomierten Cerealien-Produktes, umfassend durch mindestens ein Bindemittel verbundene Cerealie, insbesondere der vorgenannten Art, enthaltend die Schritte
a) Bereitstellen der Cerealien und einer wässrigen Lösung oder Sirup des mindestens einen Bindemittels sowie gegebenenfalls mindestens eines Zusatzstoffes, enthaltend 30 bis 100 Gew.-% Isomaltulose (bezogen auf die Gesamttrockensubstanz des Bindemittels),
b) Inverbindungbringen der Cerealien mit dem Bindemittel und gegebenenfalls dem mindestens einen Zusatzstoff und bei einer Temperatur von 70 bis 110°C,
c) Verfestigen des Bindemittels und gegebenenfalls des mindestens einen Zusatzstoffes mit den Cerealien zu einem Agglomerat aus Cerealien und Bindemittel und dem gegebenenfalls vorhandenen Zusatzstoff und
d) Trocknen des erhaltenen Agglomerats bei 120 bis 140°C, wobei das agglomerierte Cerealien-Produkt 10 bis 35 Gew.-% Isomaltulose (bezogen auf die Gesamttrockensubstanz des Cerealien-Produkts) enhält.

Das Bindemittel besteht aus Isomaltulose, besteht im wesentlichen oder enthält dieses in wesentlichen Anteilen, und zwar in Anteilen von 30 bis 100 Gew.-%, bevorzugt 40 bis 90 Gew.-%, vorzugsweise 50 bis 80 Gew.-% Isomaltulose (bezogen auf Gesamttrockensubstanz des Bindemittels) enthält. Die Erfindung sieht dabei in bevorzugter Ausführungsform vor, dass das Bindemittel in Schritt a) in Form einer wässrigen Bindemittellösung oder eines Bindemittelsirups vorliegt, und zwar mit einem Trockensubstanzgehalt von 60 - 90%, vorzugsweise 70 - 80%. Gegebenenfalls kann neben der Isomaltulose mindestens ein weiteres bindendes Agens in dem Bindemittel vorhanden sein, zum Beispiel Polydextrose. In bevorzugter Ausführungsform kann das Inverbindungbringen in Schritt b) durch Extrudieren geschehen.

In einer weiteren bevorzugten Ausführungsform ist vorgesehen, das die in Schritt b) vorgesehene Kontaktierung der Cerealie mit dem Bindemittel, insbesondere in Form einer wässrigen Lösung des Bindemittels bei erhöhter Temperatur, und zwar von 70 bis 110 °C, vorzugsweise 80 bis 100°C stattfindet. In einer weiteren bevorzugten Ausführungsform ist vorgesehen, dass im Anschluss an Schritt d) eine Trocknung des erhaltenen Agglomerats durchzuführen ist, zum Beispiel bei 120 bis 140°C.

In einer weiteren bevorzugten Ausführungsform ist vorgesehen, dass das so hergestellte Cerealien-Produkt ausgewählt ist aus der Gruppe Müsliriegel, Energieriegel, salzige Snacks und Frühstücksprodukte, insbesondere Flocken, Ringe (Loops), Kissen, Kugeln, Cornflakes (geröstete Maisflocken), Puffmais, Puffreis, Müsli, Knusperflocken (Crispies) und Cluster.

Bevorzugt enthält das Bindemittel mindestens einen Zusatzstoff, der ausgewählt ist aus der Gruppe bestehend aus Süßungsmitteln, Intensivsüßstoffen, Aromastoffen, Gewürzen, Molkereiprodukten, Präbiotika, Synbiotika, Probiotika, kakaohaltige Produkte, Schokolade, Fetten, resistende Stärke, ß-Glucane, Maisstärke, Kartoffelstärke, Reisstärke, Ergänzungsstoffen, Emulgatoren, Genusssäuren, löslichen und unlöslichen Ballaststoffen wie Inulin und Oligofructose, Konsistenzgebern, L-Carnitin, Omega-3-Fettsäuren, Vitamine, Mineralstoffe, Bindemitteln, Farbstoffen und Konservierungsstoffen.

In weiteren Ausführungsformen der Erfindung ist vorgesehen, Verfahren zur Herstellung eines gefrosteten oder glasierten Cerealien-Produktes bereitzustellen, insbesondere dervorgenannten Art, wobei dieses einen Kern aus Cerealien und eine Beschichtung aufweist.

In einer Variante wird ein glasiertes Cerealien-Produkt mit einem Kern aus Cerealien und einer Beschichtung hergestellt, indem
i) der Kern mit einer Beschichtungslösung oder einem Beschichtungssirup mit einem Gesamttrockensubstanzgehalt von 70 bis 90 Gew.-% (bezogen auf das Gewicht der Lösung oder des Sirups), enthaltend 20 bis 100 Gew.-% Isomaltulose (bezogen auf die Gesamttrockensubstanz) und eine Temperatur von 80 bis 110 °C aufweisend, beschichtet wird,
ii) die erhaltene Beschichtung bei einer Temperatur von über 100 °C getrocknet und
iii) ein beschichtetes glasiertes Cerealien-Produkt mit einem Cerealien-Kern und einer glasartigen, amorphen Beschichtung erhalten wird.

In einer weiteren Variante der Erfindung wird ein glasiertes Cerealien-Produkt mit einem Kern aus Cerealien und einer Beschichtung hergestellt, indem
aa) der Kern mit einer Beschichtungslösung oder Beschichtungsschmelze mit einem Gesamttrockensubstanzgehalt von 90 bis 100 Gew.-% (bezogen auf das Gewicht der Lösung oder Schmelze), enthaltend 20 bis 100 Gew.-% Isomaltulose (bezogen auf die Gesamttrockensubstanz) und eine Temperatur von mindestens 135 °C aufweisend, beschichtet wird,
bb) die erhaltene Beschichtung getrocknet und
cc) ein beschichtetes glasiertes Cerealien-Produkt mit einem Cerealien-Kern und einer glasartigen, amorphen Beschichtung erhalten wird.

In einer weiteren Variante wird ein gefrostetes Cerealien-Produkt mit einem Kern aus Cerealien und einer Beschichtung hergestellt, indem
x) der Kern mit einer Beschichtungslösung oder einem Beschichtungssirup oder einer -schmelze, enthaltend 20 bis 100 Gew.-% Isomaltulose (bezogen auf die Gesamttrockensubstanz) Und eine Temperatur von 70 bis 180 °C aufweisend, beschichtet wird,
y) die erhaltene Beschichtung unter Bewegung bei einer Temperatur von 50 bis unter 85 °C getrocknet und
z) ein beschichtetes gefrostetes Cerealien-Produkt mit einem Cerealien-Kern und einer kristallinen Beschichtung erhalten wird.

Die Beschichtungslösung oder der Beschichtungssirup besteht aus in wässrigen Medien vorliegender Isomaltulose beziehungsweise die Beschichtungsschmelze besteht aus geschmolzener Isomaltulose, besteht im wesentlichen oder enthält diesen in wesentlichen Anteilen und zwar in Anteilen von 20 bis 100 Gew.-%, vorzugsweise 20 bis 90 Gew.-%, insbesondere 40 bis 90 Gew.-%, vorzugsweise 50 bis 80 Gew.-% Isomaltulose und besonders bevorzugt 70 bis 90 Gew.-% (jeweils bezogen auf die Gesamttrockensubstanz der Beschichtungslösung oder des Sirups oder der Schmelze) Isomaltulose. In einer bevorzugten Ausführungsform ist vorgesehen, dass die Beschichtungslösung oder -suspension beziehungsweise -sirup oder die Schmelze eine Temperatur von 70°C bis 180°C, insbesondere 80°C bis 110°C aufweist und daher mit dieser Temperatur zur Beschichtung in Schritt i) eingesetzt wird. In bevorzugter Ausführungsform der vorliegenden Erfindung weist die Beschichtungslösung oder der-sirup einen Gesamttrockensubstanzgehalt von bevorzugt 70 bis 90 Gew.-% (bezogen auf das Gewicht der Lösung oder des Sirups) auf.

Bei hochkonzentrierten Lösungen oder Schmelzen von Isomaltulose kann in einer bevorzugten Ausführungsform der vorliegenden Erfindung eine Temperatur von 150 bis 180°C, insbesondere 140 bis 150°C für die Herstellung der Schmelze oder der Lösung eingesetzt werden. Anschließend wird in dieser Ausführungsform der hochkonzentrierten Lösung oder Schmelze bei der Beschichtung in Schritt aa) die Temperatur bei über/gleich 135°C gehalten. Unter hochkonzentrierten Lösungen oder Schmelzen wird in diesem Zusammenhang insbesondere eine Lösung oder Schmelze mit einem Trockensubstanzgehalt von 90 bis 100 Gew.-% TS (bezogen auf das Gesamtgewicht der Lösung oder der Schmelze) verstanden.

Ein in einem erfindungsgemäßen Beschichtungsverfahren eingesetzter Kern kann beispielsweise gemäß der vorstehenden Verfahrensweise der Erfindung hergestellt sein, nämlich unter Verwendung eines Bindemittels enthaltend Isomaltulose. Es kann aber auch vorgesehen sein, einen Cerealienkern einzusetzen, deren Cerealien mit einem Bindemittel einer anderen Art oder Zusammensetzung verbunden sind.

In einer weiteren bevorzugten Ausführungsform kann vorgesehen sein, dass der Cerealienkern für die Beschichtung ausgewählt ist aus extrudierten, gekochten und gepufften Cerealien, insbesondere Loops, Kissen, Kugeln, Crispies, Puffreis, Puffmais, Corn Flakes, salzige Snacks, Müsli und Cluster.

In einer Variante wird die Beschichtung in Schritt ii) bei einer Temperatur über 100°C, zum Beispiel 120°C bis 130°C, bevorzugt 125°C bis 130°C getrocknet und so ein glasiertes Cerealien-Produkt mit einem Cerealienkern und einer glasartigen amorphen Beschichtung ("Glazing") erhalten. Das erfindungsgemäße "Glazing" kann in bevorzugter Ausführungsform auch mit hochkonzentrierter Lösung oder Schmelze der vorgenannten Art durchgeführt werden.

In einer besonders bevorzugten Ausführungsform ist ein vorgenanntes Verfahren zur Herstellung einer glasartigen amorphen Beschichtung vorgesehen, wobei das erhaltene Cerealienprodukt im Anschluss an das Auftragen der amorphen Beschichtung und die Trocknung gekühlt wird, insbesondere unter Bewegung.

In einer anderen Variante wird ein Verfahren bevorzugt, gemäß dem die Beschichtung in Schritt y) der vorliegenden Verfahrensabfolge bei einer Temperatur unter 85°C, vorzugsweise 50 bis 70°C, besonders bevorzugt 50 bis 60°C getrocknet und so ein gefrostetes Cerealien-Produkt mit einem Cerealienkern und einer kristallinen Beschichtung ("Frosting") erhalten, wobei in einer Ausführungsform die beschichteten Produkte während der Trocknung in Schritt y) bewegt werden. In bevorzugter Ausführungsform der vorliegenden Erfindung wird das erfindungsgemäße "Frosting" mit einer Beschichtungslösung oder -sirup mit einem Trockensubstanzgehalt von 70 bis 90 Gew.-% TS (bezogen auf das Gesamtgewicht der Lösung oder des Sirups) durchgeführt.

In einer weiteren bevorzugten Ausführungsform ist vorgesehen, dass die Beschichtungslösung oder der Beschichtungssirup oder die Beschichtungsschmelze mindestens einen Zusatzstoff enthält. In einer bevorzugten Ausführungsform ist dieser Zusatzstoff ausgewählt aus der Gruppe bestehend aus Süßungsmitteln, Maisstärke, Kartoffelstärke, Reisstärke, ß-Glucan, resistenter Stärke, Intensivsüßstoffen, insbesondere als Acesulfam K, Sucralose, Cyclamat, Stevioside, Neohesperidin-Dihydrochalkon, Aromastoffen, Gewürzen, Molkereiprodukten, Präbiotika, Synbiotika, Probiotika, kakaohaltigen Produkten, Schokolade, Omega-3-Fettsäure, L-Carnitin, Fetten, Ergänzungsstoffen, Emulgatoren, Genusssäuren, löslichen und unlöslichen Ballaststoffen wie Inulin und Oligofructose, Konsistenzgebern, Vitaminen, Mineralstoffen, Bindemitteln, Farbstoffen und Konservierungsstoffen.

Die Erfindung umfasst zudem ein Cerealien-Produkt, herstellbar durch ein erfindungsgemäßes Verfahren, wobei das Cerealien-Produkt 50 bis 95 Gew.-% (bezogen auf Gesamttrockensubstanz des Cerealien-Produktes) Cerealien und 5 bis 50 Gew.-% (bezogen auf Gesamttrockensubstanz des Cerealien-Produktes) Isomaltulose als Bindemittel und/oder Beschichtung enthält.

Die Erfindung betrifft auch die mittels der erfindungsgemäßen Verfahren hergestellten beschichteten und unbeschichteten Produkte.

Die Erfindung betrifft auch die Verwendung von Isomaltulose zur Herstellung eines Cerealien-Produktes der vorgenannten Art, insbesondere als Bindemittel und/oder als Bestandteil einer Beschichtungslösung oder eines Beschichtungssirups oder einer Beschichtungsschmelze.

Weitere vorteilhafte Ausgestaltungen ergeben sich aus den Unteransprüchen.

Die Erfindung wird anhand der nachfolgenden Beispiele näher erläutert.

### Beispiel 1: Herstellung von gefrosteten, beschichteten Cerealien-produkten mit Isomaltulose

Gekochte, gepuffte oder extrudierte Cerealien, zum Beispiel Ringe, oder Bällchen, Cornflakes oder Puffreis werden in heißer Luft bei 80-95°C erhitzt und in eine Drehtrommel eingebracht.

Es wird eine wässrige Isomaltuloselösung aus 75% Isomaltulose und 25% Wasser, gegebenenfalls unter Zusatz von 0,05% Acesulfam K oder 0,02% Sucralose, (jeweils Gewichtsprozent, bezogen auf Gesamtlösung) hergestellt. Dies geschieht, indem Isomaltulose, gegebenenfalls die Intensivsüßstoffe, und Wasser vermischt und auf 105°C erhitzt wird, wobei alle Kristalle aufgelöst werden. Es wird ein Trockensubstanzgehalt von 77 - 79% TS Isomaltulose eingestellt. Die so erhaltene Lösung wird auf eine Temperatur von 80 bis 100 °C eingestellt und im folgenden Beschichtungsverfahren auch bei dieser Temperatur gehalten. Um die Beschichtungslösung auf die Cerealien aufzubringen, werden in die Drehtrommel langsam 500g der hergestellten Isomaltuloselösung zu 1000g der Cerealien gegeben. Es wird 0,5 bis 1 Minute beschichtet. Im Anschluss an die Beschichtung ist bereits eine kristalline Schicht auf dem Produkt erkennbar. Das Produkt wird mit trockener und warmer Luft mit einer Temperatur von 60 bis 80°C unter Bewegung in der Drehtrommel getrocknet. Alternativ kann vorgesehen sein, das Produkt 10 Minuten in einem Ofen bei 60 bis 80°C zu trocknen. Nach etwa 10 Minuten Trocknungszeit ist die kristalline Beschichtung im wesentlichen trocken und erschient vollständig weiß und kristallisiert. Das erhaltene Produkt wird anschließend vor dem Verpacken auf Raumtemperatur abgekühlt.

### Beispiel 2: Herstellung eines Cerealienproduktes mit einer glasartigen Beschichtung mit Isomaltulose

Gekochte, gepuffte oder extrudierte Cerealien, zum Beispiel Ringe, Bällchen, Cornflakes oder Puffreis werden in heißer Luft bei 80-95°C erhitzt und in eine Drehtrommel eingebracht.

Es wird eine wässrige Isomaltuloselösung aus 70% Isomaltulose, 5% Kakaopulver und 25% Wasser, gegebenenfalls unter Zusatz von 0,05% Acesulfam K oder 0,02% Sucralose, (jeweils Gewichtsprozent, bezogen auf Gesamtlösung) hergestellt. Dies geschieht, indem Isomaltulose, gegebenenfalls die Intensivsüßstoffe, und Wasser vermischt und auf 105°C erhitzt wird, wobei alle Kristalle aufgelöst werden. Es wird ein Trockensubstanzgehalt von 72 - 74% TS Isomaltulose beziehungsweise ein Gesamttrockensubstanzgehalt von 77 bis 79 Gew.-% TS eingestellt. Die so erhaltene Lösung wird auf eine Temperatur von 80 bis 100 °C eingestellt und im folgenden Beschichtungsverfahren auch bei dieser Temperatur gehalten. Um die Beschichtungslösung auf die Cerealien aufzubringen, werden in die Drehtrommel langsam 500g der hergestellten Isomaltuloselösung zu 1000g der Cerealien gegeben. Es wird 0,5 bis 1 Minute beschichtet. Das Produkt wird in einer Trocknungsvorrichtung bei einer Temperatur von etwa 130°C getrocknet. Nach etwa 10 bis 15 Minuten ist die glasartige Beschichtung bereits im wesentlichen trocken, erscheint aber noch klebrig. Das erhaltene Produkt wird daher unter Bewegung mit Luft von Raumtemperatur für 10 bis 20 Minuten abgekühlt, bevor es verpackt wird. Man erhält ein nicht klebriges Produkt.

### Beispiel 3: Herstellung eines Cerealienproduktes mit glasartiger Beschichtung mittels hoch-konzentrierter Isomaltuloselösung oderschmelze

Gekochte, gepuffte oder extrudierte Cerealien, zum Beispiel Ringe, Bällchen, Cornflakes oder Puffreis werden in heißer Luft bei 80 - 95°C erhitzt und in eine Drehtrommel eingebracht.

Es wird eine wässrige Isomaltuloselösung aus 75% Isomaltulose und 25% Wasser, gegebenenfalls unter Zusatz von 0,05% Acesulfam K oder 0,02% Sucralose, (jeweils Gewichtsprozent, bezogen auf Gesamtlösung) hergestellt. Dies geschieht, indem Isomaltulose, gegebenenfalls die Intensivsüßstoffe, und Wasser vermischt und auf 140 bis 150°C erhitzt wird, wobei ein Sirup erhalten wird. Es wird ein Trockensubstanzgehalt von 95 - 99% TS Isomaltulose eingestellt. Alternativ kann mit Isomaltulose in einer geeigneten Schmelzvorrichtung bei einer Temperatur über dem Schmelzpunkt von Isomaltulose auch eine Schmelze hergestellt werden. Die so erhaltene Lösung beziehungsweise Schmelze wird auf eine Temperatur von 135°C eingestellt und im folgenden Beschichtungsverfahren auch bei dieser Temperatur gehalten. Um die Beschichtungslösung auf die Cerealien aufzubringen, werden in die auf etwa 130°C erhitzte Drehtrommel langsam 500g der hergestellten Isomaltuloselösung zu 1000g der Cerealien gegeben. Es wird 0,5 bis 1 Minute beschichtet. Im Anschluss an die Beschichtung wird das Produkt aus der Drehtrommel entfernt und in einer Trocknungsvorrichtung unter Bewegung mit Luft von Raumtemperatur für 10 bis 20 Minuten abgekühlt, bevor es verpackt wird. Man erhält ein nicht klebriges Produkt.

### Beispiel 4: Herstellung eines Cerealienproduktes unter Verwendung von Isomaltulose als Bindemittel

### Rezeptur des Bindemittels:

| Bestandteil | % (Gewichtsprozent) |
|---|---|
| Isomaltulose | 60,00 |
| Inulin oder Oligofructose | 20,00 |
| Wasser | 20,00 |
| Gesamt | 100,00 |

Das Bindemittel kann optional Saccharose, bis zu 10% Fett und/oder bis zu 0,4% Lecithin enthalten.

### Rezeptur der Cerealien (Cerealiengemisch):

| Bestandteil | % (Gewichtsprozent) |
|---|---|
| Nutrigrain | 33,00 |
| Weizenkleie Mini Crispies | 22,00 |
| Kokosnussflocken | 11,00 |
| Haselnussstücke | 34,00 |
| Gesamt | 100,00 |

### Herstellung:

In einem ersten Verfahrensschritt wird Isomaltulose mit Inulin oder Oligofructose vermischt und diese Mischung mit Wasser aufgekocht, wobei ein Trockensubstanzgehalt von 80 bis 82% eingestellt wird. Das so hergestellte Bindemittel wird mit dem Cerealiengemisch in einem Verhältnis von 20% Bindemittel und 80% Cerealiengemisch (jeweils Gew.-%) vermischt und ausgerollt. Es wird anschließend in einem Trockner bei 130°C getrocknet und in Barren geschnitten oder in Cluster zerbrochen sowie anschließend vor dem Verpacken gekühlt.

### Beispiel 5: Herstellung von Cerealienkugeln aus Getreideextrudat

### Rezeptur:

| Rohstoffe | % |
|---|---|
| Weizenmehl | 66,09 |
| Maismehl | 16,52 |
| Magermilchpulver | 4,13 |
| Kakaopulver | 4,13 |
| Salz | 0,41 |
| NaHCO₃ | 0,41 |
| Isomaltulose | 8,26 |
| Acesulfam K | 0,05 |
| Gesamt | 100,00 |

### Herstellung:

Die Pulver werden 5 Minuten bei 200 U/Min. gemischt und in einen gravimetrischen Förderer überführt. In einem geeigneten hochscherenden Doppelschneckenextruder werden sie extrudiert; Parameter: Standard. Anschließend wird das Extrudat abgekühlt.

### Extrusionsparameter (Beispiel)

### Extruder:

- Hochscherender Doppelschneckenextruder (Togum): TO EX 45 H
- Schneckendurchmesser: 45 mm
- Arbeitslänge (working length): 16 x Schneckendurchmesser

### Temperatureinstellung des Doppelschneckenextruders:

| Einstellung | |
|---|---|
| Zufuhrzone | 20°C |
| Mischzone | 145°C |
| Plastizierzone | 145°C |
| Mehrfachstrang-Ausgang | 145°C |
| U/Min. | 200 |

### Prozessparameter:

| Druck | 46 bar |
|---|---|
| Kapazität | 22 Nm |
| Dosierung | |
| A (Pulvermischung, gravimetr.) | 27 kg/h |
| B (gravimetrisch) | ---- |
| C (Wasser, volumetrisch) | 0,45 kg/h |

## Patentansprüche

1. Cerealien-Produkt, umfassend durch mindestens ein Bindemittel verbundene Cerealien und/oder mindestens eine Beschichtung aufweisende Cerealien, wobei das Cerealien-Produkt 50 bis 95 Gew.-% (bezogen auf Gesamttrockensubstanz des Cerealien-Produktes) Cerealien und 5 bis 50 Gew.-% (bezogen auf Gesamttrockensubstanz des Cerealien-Produktes) Isomaltulose als Bindemittel und/oder als Beschichtung, und zwar als amorphes Glazing oder als kristallines Frosting, enthält.

2. Cerealien-Produkt nach Anspruch 1, wobei das Cerealien-Produkt einen Kern aus Cerealien, optional mit mindestens einem Bindemittel, und mindestens eine auf dem Kern aufgebrachte Beschichtung aufweist.

3. Cerealien-Produkt nach Anspruch 2, wobei das Cerealien-Produkt einen Kern aus Cerealien, optional mit mindestens einem Bindemittel, und mindestens eine auf dem Kern aufgebrachte Beschichtung aufweist und wobei die Isomaltulose allein im Kern vorhanden ist.

4. Cerealien-Produkt nach Anspruch 2, wobei das Cerealien-Produkt einen Kern aus Cerealien, optional mit mindestens einem Bindemittel, und mindestens eine auf dem Kern aufgebrachte Beschichtung aufweist, und wobei die Isomaltulose allein in der Beschichtung vorhanden ist.

5. Cerealien-Produkt nach einem der Ansprüche 1 bis 4, wobei das Cerealien-Produkt ausgewählt ist aus der Gruppe bestehend aus Müsliriegeln, Energieriegeln, salzigen Snacks und Frühstücksprodukten, insbesondere Cluster, Müsli, Cornflakes, Puffmais, Puffreis, Kissen, Kugeln, Ringen, Flocken oder Knusperflocken.

6. Cerealien-Produkt nach einem der Ansprüche 1 bis 5, wobei das Cerealien-Produkt 10 bis 35 Gew.-% (bezogen auf Gesamttrockensubstanz des Cerealien-Produktes), vorzugsweise 20 bis 30 Gew.-% (bezogen auf Gesamttrockensubstanz des Cerealien-Produktes) Isomaltulose enthält.

7. Cerealien-Produkt nach einem der Ansprüche 1 bis 6, wobei die Isomaltulose der einzige zugesetzte Zucker ist.

8. Cerealien-Produkt nach einem der Ansprüche 1 bis 6, wobei die Isomaltulose das einzige zugesetzte körpergebende süßende Agens ist.

9. Cerealien-Produkt nach einem der Ansprüche 1 bis 6, wobei die Isomaltulose das einzige zugesetzte süßende Agens ist.

10. Cerealien-Produkt nach einem der Ansprüche 1 bis 9, wobei die Cerealien in unbehandelter, extrudierter, gekochter oder gepuffter Form vorliegen.

11. Cerealien-Produkt nach einem der Ansprüche 1 bis 10, wobei das Cerealien-Produkt im Kern und/oder in der Beschichtung mindestens einen Zusatzstoff aufweist, ausgewählt aus der Gruppe bestehend aus Süßungsmitteln, Reisstärke, Kartoffelstärke, Maisstärke, resistente Stärke, ß-Glucan, Intensivsüßstoffen, Aromastoffen, Gewürzen, Molkereiprodukten, Präbiotika, Synbiotika, Probiotika, kakaohaltige Produkte, Schokolade, Fetten, Ergänzungsstoffen, Emulgatoren, Genusssäuren, löslichen und unlöslichen Ballaststoffen wie Inulin und Oligofructose, Konsistenzgebern, Vitamine, L-Carnitin, Omega-3-Fettsäuren; Mineralstoffe, Bindemitteln, Farbstoffen und Konservierungsstoffen.

12. Verfahren zur Herstellung eines agglomerierten Cerealien-Produkts, umfassend durch mindestens ein Bindemittel verbundene Cerealien, enthaltend die Schritte:
a) Bereitstellen der Cerealien und eine wässrige Lösung oder Sirup des mindestens einen Bindemittels, enthaltend 30 bis 100 Gew.-% Isomaltulose (bezogen auf die Gesamttrockensubstanz des Bindemittels)
b) Inverbindungbringen der Cerealien mit dem Bindemittel bei einer Temperatur von 70 bis 110 °C,
c) Verfestigen des Bindemittels mit den Cerealien zu einem Agglomerat aus Cerealien und Bindemittel und
d) Trocknen des erhaltenen Agglomerats bei 120 bis 140 °C,
wobei das agglomerierte Cerealien-Produkt 10 bis 35 Gew.-% Isomaltulose (bezogen auf Gesamttrockensubstanz des Cerealien-Produkts) enthält.

13. Verfahren zur Herstellung eines glasierten Cerealien-Produkts mit einem Kern aus Cerealien und einer Beschichtung, wobei
a) der Kern mit einer Beschichtungslösung oder einem Beschichtungssirup mit einem Gesamttrockensubstanzgehalt von 70 bis 90 Gew.-% (bezogen auf das Gewicht der Lösung oder des Sirups), enthaltend 20 bis 100 Gew.-% Isomaltulose (bezogen auf die Gesamttrockensubstanz) und eine Temperatur von 80 bis 110 °C aufweisend, beschichtet wird,
b) die erhaltene Beschichtung bei einer Temperatur von über 100 °C getrocknet und
c) ein beschichtetes glasiertes Cerealien-Produkt mit einem Cerealien-Kern und einer glasartigen, amorphen Beschichtung erhalten wird.

14. Verfahren zur Herstellung eines glasierten Cerealien-Produkts mit einem Kern aus Cerealien und einer Beschichtung, wobei
a) der Kern mit einer Beschichtungslösung oder Beschichtungsschmelze mit einem Gesamttrockensubstanzgehalt von 90 bis 100 Gew.-% (bezogen auf das Gewicht der Lösung oder Schmelze), enthaltend 20 bis 100 Gew.-% Isomaltulose (bezogen auf die Gesamttrockensubstanz) und eine Temperatur von mindestens 135 °C aufweisend, beschichtet wird,
b) die erhaltene Beschichtung getrocknet und
c) ein beschichtetes glasiertes Cerealien-Produkt mit einem Cerealien-Kern und einer glasartigen, amorphen Beschichtung erhalten wird.

15. Verfahren zur Herstellung eines gefrosteten Cerealien-Produkts mit einem Kern aus Cerealien und einer Beschichtung, wobei
a) der Kern mit einer Beschichtungslösung oder einem Beschichtungssirup oder einer -schmelze, enthaltend 20 bis 100 Gew.-% Isomaltulose (bezogen auf die Gesamttrockensubstanz) und eine Temperatur von 70 bis 180 °C aufweisend, beschichtet wird,
b) die erhaltene Beschichtung unter Bewegung bei einer Temperatur von 50 bis unter 85 °C getrocknet und
c) ein beschichtetes gefrostetes Cerealien-Produkt mit einem Cerealien-Kern und einer kristallinen Beschichtung erhalten wird.

16. Verfahren nach einem der Ansprüche 12 bis 15, wobei das Cerealien-Produkt ausgewählt ist aus: Müsliriegeln, salzigen Snacks, Energieriegeln und Frühstücksprodukten, insbesondere Flocken, Ringen (Loops), Kissen, Kugeln, Cornflakes, Müsli, Puffreis, Puffmais, Knusperflocken (Crispies) und Clustern.

17. Verfahren nach einem der Ansprüche 12 bis 16, wobei das Bindemittel und/oder die Beschichtungslösung, -sirup oder -schmelze mit mindestens einem Zusatzstoff versehen ist, der ausgewählt aus: Süßungsmitteln, Intensivsüßstoffen, Aromastoffen, Gewürzen, Molkereiprodukten, Präbiotika, Synbiotika, Probiotika, kakaohaltigen Produkten, Schokolade, Fetten, resistende Stärke, ß-Glucanen, Maisstärke, Kartoffelstärke, Reisstärke, Ergänzungsstoffen, Emulgatoren, Genusssäuren, löslichen und unlöslichen Ballaststoffen wie Inulin und Oligofructose, Konsistenzgebern, L-Carnitin, Omega-3-Fettsäuren, Vitamine, Mineralstoffe, Bindemitteln, Farbstoffen und Konservierungsstoffen.

18. Cerealien-Produkt, herstellbar durch das Verfahren nach einem der Ansprüche 12 bis 17, wobei das Cerealien-Produkt 50 bis 95 Gew.-% (bezogen auf Gesamttrockensubstanz des Cerealien-Produktes) Cerealien und 5 bis 50 Gew.-% (bezogen auf Gesamttrockensubstanz des Cerealien-Produktes) Isomaltulose als Bindemittel und/oder als Beschichtung, und zwar als amorphes Glazing oder als kristallines Frosting, enthält.

## Claims

1. Cereal product, comprising cereals bound together by at least one binding agent, and/or cereals comprising at least one coating, wherein the cereal product contains 50 to 95 % by weight (based on the total dry substance of the cereal product) cereals and 5 to 50 % by weight (based on the total dry substance of the cereal product) isomaltulose as binding agent and/or as coating, in fact as amorphous glazing or as crystalline frosting.

2. Cereal product according to claim 1, the cereal product comprising a core of cereals, optionally with at least one binding agent, and at least one coating applied onto the core.

3. Cereal product according to claim 2, the cereal product comprising a core of cereals, optionally with at least one binding agent, and at least one coating applied onto the core, and wherein the isomaltulose is solely present in the core.

4. Cereal product according to claim 2, the cereal product comprising a core of cereals, optionally with at least one binding agent, and at least one coating applied onto the core, and wherein the isomaltulose is solely present in the coating.

5. Cereal product according to any one of claims 1 to 4, the cereal product being selected from the group consisting of muesli bars, energy bars, salty snacks, and breakfast products, in particular clusters, muesli, corn flakes, puffed corn, puffed rice, mini cereal bars, beads, loops, flakes or crispies.

6. Cereal product according to any one of claims 1 to 5, the cereal product containing 10 to 35 % by weight (based on the total dry substance of the cereal product), preferably 20 to 30 % by weight of isomaltulose (based on the total dry substance of the cereal product).

7. Cereal product according to any one of claims 1 to 6, isomaltulose being the sole sugar added.

8. Cereal product according to any one of claims 1 to 6, isomaltulose being the sole bulking sweetening agent added.

9. Cereal product according to any one of the claims 1 to 6, isomaltulose being the sole sweetening agent added.

10. Cereal product according to any one of the claims 1 to 9, the cereals being present in unprocessed, extruded, cooked or puffed form.

11. Cereal product according to any one of the claims 1 to 10, the cereal product comprising in the core and/or in the coating at least one additive selected from the group consisting of sweeteners, rice starch, potato starch, corn starch, resistant starch, β-glucan, intensive sweetener, aroma compounds, spices, dairy products, prebiotics, synbiotics, probiotics, cocoa containing products, chocolate, fats, supplements, emulsifying agents, acids for consumption, soluble and insoluble dietary fibers such as inulin and oligofructose, consistency providing agents, vitamins, L-carnitine, omega-3 fatty acids, minerals, binding agents, dyes, and preservatives.

12. Method for producing an agglomerated cereal product, comprising cereals bound together by at least one binding agent, comprising the steps:
a) providing cereals and an aqueous solution or syrup of the at least one binding agent, containing 30 to 100 % by weight of isomaltulose (based on the total dry substance of the binding agent),
b) bringing the cereals in contact with the binding agent at a temperature of from 70 to 110 °C,
c) solidifying the binding agent and the cereals to form an agglomerate of cereals and binding agent, and
d) drying the obtained agglomerate at 120 to 140 °C,
wherein the agglomerated cereal product contains 10 to 35 % by weight of isomaltulose (based on the total dry substance of the cereal product).

13. Method for producing a glazed cereal product having a core of cereals and a coating, wherein
a) the core is coated with a coating solution or a coating syrup with a total dry matter content of 70 to 90 % by weight (based on the weight of the solution or syrup), containing 20 to 100 % by weight of isomaltulose (based on the total dry matter) and having a temperature of 80 to 110 °C,
b) the obtained coating is dried at a temperature in excess of 100 °C, and
c) a coated, glazed cereal product having a cereal core and a glassy, amorphous coating is obtained.

14. Method for producing a glazed cereal product having a core of cereals and a coating, wherein
a) the core is coated with a coating solution or a coating melt with a total dry matter content of 90 to 100 % by weight (based on the weight of the solution or melt), containing 20 to 100 % by weight of isomaltulose (based on the total dry matter) and having a temperature of at least 135 °C,
b) the obtained coating is dried, and
c) a coated, glazed cereal product having a cereal core and a glassy, amorphous coating is obtained.

15. Method for producing a frosted cereal product having a core of cereals and a coating, wherein
a) the core is coated with a coating solution or a coating syrup or melt containing 20 to 100 % by weight of isomaltulose (based on the total dry matter) and having a temperature of 70 to 180 °C,
b) the obtained coating is dried at a temperature of 50 to below 85 °C while being moved, and
c) a coated, frosted cereal product having a cereal core and crystalline coating is obtained.

16. Method according to any one of claims 12 to 15, the cereal product being selected from: muesli bars, salty snacks, energy bars, and breakfast products, in particular flakes, loops, mini cereal bars, beads, corn flakes, muesli, puffed rice, puffed corn, crispies, and clusters.

17. Method according to any one of claims 12 to 16, wherein the binding agent and/or the coating solution, syrup or melt is provided with at least one additive selected from: sweeteners, intensive sweeteners, aroma substances, spices, dairy products, prebiotics, synbiotics, probiotics, cocoa containing products, chocolate, fats, resistant starch, β-glucans, corn starch, potato starch, rice starch, supplements, emulsifying agents, acids for consumption, soluble and insoluble dietary fibers such as inulin and oligofructose, consistency providing agents, L-carnitine, omega-3 fatty acids, vitamins, minerals, binding agents, dyes, and preservatives.

18. Cereal product, producible by the method according to any one of claims 12 to 17, wherein the cereal product contains 50 to 95 % by weight (based on the total dry substance of the cereal product) cereals and 5 to 50 % by weight (based on the total dry substance of the cereal product) isomaltulose as binding agent and/or as coating, in fact as amorphous glazing or as crystalline frosting.

## Revendications

1. Produit de céréales comprenant des céréales reliées par au moins un liant et/ou des céréales présentant au moins un enrobage, dans lequel le produit de céréales contient 50 à 95 % en poids (par rapport à la substance sèche totale du produit de céréales) de céréales et 5 à 50 % en poids (par rapport à la substance sèche totale du produit de céréales) d'isomaltulose comme liant et/ou comme enrobage, à savoir comme glaçage amorphe (glazing) ou comme glaçage cristallin (frosting).

2. Produit de céréales selon la revendication 1, dans lequel le produit de céréales présente un coeur en céréales, en option avec au moins un liant, et au moins un enrobage appliqué sur le coeur.

3. Produit de céréales selon la revendication 2, dans lequel le produit de céréales présente un coeur en céréales, en option avec au moins un liant, et au moins un enrobage appliqué sur le coeur, et dans lequel l'isomaltulose est uniquement présent dans le coeur.

4. Produit de céréales selon la revendication 2, dans lequel le produit de céréales présente un coeur en céréales, en option avec au moins un liant, et au moins un enrobage appliqué sur le coeur, et dans lequel l'isomaltulose est uniquement présent dans l'enrobage.

5. Produit de céréales selon une des revendications 1 à 4, dans lequel le produit de céréales est sélectionné parmi le groupe constitué de barres de muesli, de barres énergétiques, de snacks salés et de produits pour le petit déjeuner, notamment de rochers, muesli, cornflakes, maïs soufflé, riz soufflé, coussins, billes, anneaux, flocons ou flocons croustillants.

6. Produit de céréales selon une des revendications 1 à 5, dans lequel le produit de céréales contient 10 à 35 % en poids (par rapport à la substance sèche totale du produit de céréales), de préférence 20 à 30 % en poids (par rapport à la substance sèche totale du produit de céréales) d'isomaltulose.

7. Produit de céréales selon une des revendications 1 à 6, dans lequel l'isomaltulose est le seul sucre ajouté.

8. Produit de céréales selon une des revendications 1 à 6, dans lequel l'isomaltulose est le seul agent édulcorant ajouté donnant du corps.

9. Produit de céréales selon une des revendications 1 à 6, dans lequel l'isomaltulose est le seul agent édulcorant ajouté.

10. Produit de céréales selon une des revendications 1 à 9, dans lequel les céréales sont présentes sous forme non traitée, extrudée, cuite ou soufflée.

11. Produit de céréales selon une des revendications 1 à 10, dans lequel le produit de céréales présente dans le coeur et/ou dans l'enrobage au moins un additif sélectionné parmi le groupe constitué d'édulcorants, d'amidon de riz, d'amidon de pomme de terre, d'amidon de maïs, d'amidon résistant, de β-glucane, d'édulcorants intensifs, d'agents aromatisants, d'épices, de produits laitiers, de prébiotiques, de synbiotiques, de probiotiques, de produits cacaotés, de chocolats, de graisses, de compléments, d'émulsifiants, d'acides alimentaires, de fibres solubles et insolubles comme l'inuline et l'oligofructose, de promoteurs de consistance, de vitamines, de L-carnitine, d'acides gras oméga-3 ; de minéraux, de liants, de colorants et de conservateurs.

12. Procédé de fabrication d'un produit de céréales aggloméré, comprenant des céréales reliées par au moins un liant, contenant les étapes :
a) mise à disposition des céréales et d'une solution aqueuse ou d'un sirop de l'au moins un liant, contenant 30 à 100 % en poids d'isomaltulose (par rapport à la substance sèche totale du liant),
b) mise en relation des céréales avec le liant à une température de 70 à 110 °C,
c) compactage du liant avec les céréales en un agglomérat de céréales et de liant, et
d) séchage de l'agglomérat obtenu à 120 à 140 °C,
dans lequel le produit de céréales aggloméré contient 10 à 35 % en poids d'isomaltulose (par rapport à la substance sèche totale du produit de céréales).

13. Procédé de fabrication d'un produit de céréales glacé avec un coeur en céréales et un enrobage, dans lequel
a) le coeur est enrobé d'une solution d'enrobage ou d'un sirop d'enrobage avec une teneur en substance sèche totale de 70 à 90 % en poids (par rapport au poids de la solution ou du sirop), contenant 20 à 100 % en poids d'isomaltulose (par rapport à la substance sèche totale) et présentant une température de 80 à 110 °C,
b) l'enrobage obtenu est séché à une température supérieure à 100 °C, et
c) un produit de céréales glacé enrobé avec un coeur de céréales et un enrobage amorphe, de type glaçage est obtenu.

14. Procédé de fabrication d'un produit de céréales glacé avec un coeur en céréales et un enrobage, dans lequel
a) le coeur est enrobé d'une solution d'enrobage ou d'une masse fondue d'enrobage avec une teneur en substance sèche totale de 90 à 100 % en poids (par rapport au poids de la solution ou de la masse fondue), contenant 20 à 100 % en poids d'isomaltulose (par rapport à la substance sèche totale) et présentant une température d'au moins 135 °C,
b) l'enrobage obtenu est séché, et
c) un produit de céréales glacé enrobé avec un coeur de céréales et un enrobage amorphe, de type glaçage est obtenu.

15. Procédé de fabrication d'un produit de céréales glacé au sucre avec un coeur en céréales et un enrobage, dans lequel
a) le coeur est enrobé d'une solution d'enrobage ou d'un sirop ou d'une masse fondue d'enrobage, contenant 20 à 100 % en poids d'isomaltulose (par rapport à la substance sèche totale) et présentant une température de 70 à 180 °C,
b) l'enrobage obtenu est séché en mouvement à une température de 50 à moins de 85 °C, et
c) un produit de céréales glacé au sucre enrobé avec un coeur de céréales et un enrobage cristallin est obtenu.

16. Procédé selon une des revendications 12 à 15, dans lequel le produit de céréales est sélectionné parmi : des barres de muesli, des snacks salés, des barres énergétiques et des produits pour le petit déjeuner, notamment des flocons, anneaux (loops), coussins, billes, cornflakes, muesli, riz soufflé, maïs soufflé, flocons croustillants (crispies) et rochers.

17. Procédé selon une des revendications 12 à 16, dans lequel le liant et/ou la solution, le sirop ou la masse fondue d'enrobage est pourvu d'au moins un additif qui est sélectionné parmi : des édulcorants, des édulcorants intensifs, des agents aromatisants, des épices, des produits laitiers, des prébiotiques, des synbiotiques, des probiotiques, des produits cacaotés, des chocolats, des graisses, de l'amidon résistant, des β-glucanes, de l'amidon de maïs, de l'amidon de pomme de terre, de l'amidon de riz, des compléments, des émulsifiants, des acides alimentaires, des fibres solubles et insolubles comme l'inuline et l'oligofructose, des promoteurs de consistance, de la L-carnitine, des acides gras oméga-3, des vitamines, des minéraux, des liants, des colorants et des conservateurs.

18. Produit de céréales susceptible d'être obtenu par le procédé selon une des revendications 12 à 17, dans lequel le produit de céréales contient 50 à 95 % en poids (par rapport à la substance sèche totale du produit de céréales) de céréales et 5 à 50 % en poids (par rapport à la substance sèche totale du produit de céréales) d'isomaltulose comme liant et/ou enrobage, à savoir comme glaçage amorphe (glazing) ou comme glaçage cristallin (frosting).
